# EUROPEAN PATENT APPLICATION

(11) **EP 1 970 331 A1**
(43) Date of publication of application: **17.09.2008**
(21) Application number: 08380030.0
(22) Date of filing: 06.02.2008
(51) Int. Cl.: B65G 53/52, F16L 57/06

(54) **Antiwear protection system using antiwear inserts**

(30) Priority: 16.03.2007 ES 200700699
(71) Applicant: Ros Roca, S.A., 25300 Tarrega (Lleida) (ES)
(72) Inventor: Martinez Rodrigo, Agustín, 25300 Tarrega (Lleida) (ES)
(74) Representative: Aragones Forner, Rafael Angel

(57) **Abstract**

The elbows (1) of the pipes of the pneumatic conveyance network of a pneumatic waste collection facility are subjected to abrasion and impact wear. In order to minimise said wear, inserts (8) being made of antiwear alloys or metals and the like are applied in said areas.

The invention consists in attaching to said areas of the pipes (1) metallic components (8) being made of a bimetallic sheet being composed of a base metallic sheet (4) with a second sheet (3) being a deposition of alloys of several metals such as Fe-Cr-Mn-Bo and Fe-Cr-Nb-Mo-W, among others.

## Description

### OBJECT OF THE INVENTION

The present invention has as its object a complex system affording antiwear protection to the pneumatic conveyance network of a pneumatic waste collection facility.

### FIELD OF THE INVENTION

This method being meant to be used in the public way and in the Central Collection Plant forms part of a pneumatic collection system.

This system affords protection against wear by erosion, abrasion and impact to the network being formed by the pipes, fittings, elbows and bend branchings and their extensions in the pneumatic waste collection conveyance network and thus assures its useful life during 30 years of operation with a high reliability and low maintenance costs.

### BACKGROUND OF THE INVENTION

The pneumatic conveyance networks are normally carried out in stainless steel or carbon steel. The passage of wastes produces abrasion and impact phenomena practically only affecting the fittings, elbows and bend branchings and the pipe area being immediately downstream of the fitting and will thus eventually cause them to be perforated by the usage, it being a usual practice to then proceed to have them repaired or replaced, these latter being costly and inefficient tasks since they have to be carried out in what happens to be a buried facility. These fittings are usually installed with bigger thicknesses, thicker extension lengths in the pipe or several metals in order to thus be in a position to withstand this phenomenon during a longer period of time.

### SUMMARY OF THE INVENTION

The aforementioned drawbacks have now been totally obviated by means of the metallic graft system of the invention.

The invention is based on simplifying the facility by having it made of pipe thicknesses being within a lowest range of rational thicknesses being of for example a maximum of 15 mm, and by having the fittings made with thicknesses neither surpassing this lowest range, with the exception of the possible elbow and junction extensions, by means of applying the grafts being the object of this invention.

In pneumatic conveyance it is convenient to use pipes with diameters of between 400 and 550 mm and with a bend radius at the elbows of between 3D and 4D (D = 200 to 2200 mm) of radius.

In the areas being subjected to minimum wear the fittings being installed in them will be of the same material as the base pipe with the pipe extensions being deemed opportune, and when entering those areas which because of the waste volume to be conveyed will be predictably subjected to high wear the fittings that will be used in them also with the straight pipe extensions being deemed opportune will be nevertheless provided with grafts being made of antiwear materials and in those cases being most likely liable to wear with serious consequences will be arranged in inspection boxes.

The antiwear grafts will be plates of variable size normally measuring 800 mm by 350 mm and formed with the geometry of the elbow area being replaced by them. They are based on a base sheet being made of the same metal as the elbow or branching and having an antiwear metal deposition having a thickness of several millimetres as per the applicable specifications and being of varied composition, such as Fe-Cr-Mn-Bo or Fe-Cr-Nb-Mo-W alloys or special alloys serving the same purpose, thus forming bimetallic sheets that will replace the fitting, elbow or branching area being subjected to the impact or erosion, i.e. in short to the wear.

The thicknesses and characteristics of the antiwear bimetallic sheets making up the grafts will be quantified so as to assure for the buried network a minimum useful life of 50 years against wear. Even so, in the sections with a higher risk of wear or when the theoretical thickness for the deposition is of more than 6 millimetres the aforementioned fittings will be placed in an accessible, unburied location such as inspection boxes or buildings.

The antiwear bimetallic grafts will be installed by welding thereby replacing that portion of a normal elbow which could be affected by the wear phenomena. In the inspectable fittings this attachment will be carried out by means of screw fastening in order to thus facilitate their inspection and possible replacement.

These base alloys being used for the bimetallic sheet making up the graft are fundamentally characterised in that in those locations being exposed to the risk of wear they provide the inner surface of the elbow or branching with the characteristics allowing it to withstand said wear as based on several parameters including among them the attained surface hardness which will be in the range of between 630 and 1,000 Vickers degrees, this bringing about as a practical result the attainment of a wear resistance being between 15 and 45 times higher as compared with that of a normal steel.

The present invention also provides for the implementation of a computerised method for continuously controlling the actual thicknesses in the whole network including both the pipes and the elbows and branchings, this allowing to eliminate the uncertainty as regards their condition and much beforehand alerting to the unforeseen wear phenomena possibly occurring both because of a wear action or because of corrosion or other phenomena.

These and other characterising features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Fig. 1 is a perspective view of an elbow with the graft of the invention having already been installed.
Fig. 2 is a sectional view of a sectioned portion of the fitting with the antiwear plate having been attached by welding, for buried networks.
Fig. 3 is a sectional view of a sectioned portion of the fitting with the antiwear plate having been attached by means of screw fastening and provided with a seal, for inspectable networks.
Figs 3A and 3B are each a depiction of a way to attach the antiwear component to the base fitting of the pipe by welding and by means of screw fastening with seal, respectively.
Fig. 4 is a sectional view of the thickness control probe.
Fig. 5 is a sectional view of a 90° elbow illustrating the wear zone under normal conveying conditions. Fig. 5A is an essentially frontal view of the wear zone being illustrated in Fig. 5.
Fig. 6 is a sectional view of a 30° elbow illustrating the wear zone under normal conveying conditions. Fig. 6A is an essentially frontal view of the wear zone being illustrated in Fig. 6.

### DETAILED DESCRIPTION OF A PREFERRED EMBODIMENT

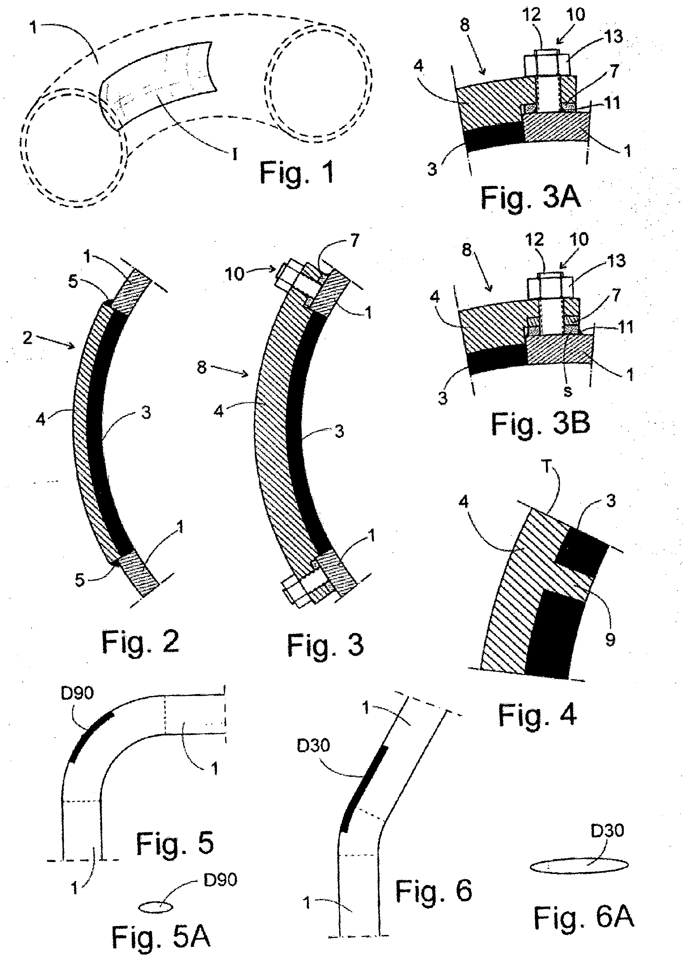

According to the drawings the antiwear fittings being the object of the present invention are mainly composed of five portions:
A) The base element -1- being the actual standardised fitting of the pipe of the facility which has had an area that will be predictably submitted to impact or abrasion wear removed from it and replaced by the antiwear bimetallic sheet graft -I- and thereby incorporates the component with graft -2- or -8- which will be ulteriorly attached to the fitting of the pertinent pipe.
B) The graft-component of antiwear bimetallic sheet -2- and -8- to be fitted onto the base -1-. Said piece incorporates the means being used to have it fitted by welding or by means of screw fastening to the piece making up the fitting -1-. And it has the thickness control probe -T- for ultrasound measurement in the grafts to be installed in inspectable areas.
C) In the grafts to be located in inspectable areas (Figs. 3, 3A and 3B) and in order to be in a position to measure by means of ultrasounds the actual wear of the protected area a probe -T- is left which is made of the base metal and has a 10 mm diameter, said probe thus making up a contact -9- with the waste passage through the elbow or pipe in question.
D) The bimetallic piece -2- being composed of the base sheet -4- and the deposited antiwear alloy -3- in the chosen dimensioning.
E) In the completion of the graft the piece -2- is permanently attached to the fitting by welding -5- in the buried networks, and the piece -8- is removably attached to the fitting by means of screw fastening -10- in the fittings being located in inspectable areas.
F) In the case of the inspectable attachments being carried out by means of screw fastening an adequate seal -7- prevents the air from possibly leaking from the pneumatic conveyance system.

As illustrated in Figs. 3A and 3B, in the case of the inspectable networks the antiwear component can be attached in two different ways by means of screw fastening, Fig. 3A on the one hand hence illustrating the attachment being carried out by directly welding -11- the stud -12- to the base fitting (pipe) -1- and by means of the corresponding nut -13- fixedly attaching the component with antiwear graft -8- to the base fitting with the interposition of the seal -7-.

On the other hand and as illustrated in Fig. 3B the attachment by means of screw fastening can be carried out by threadingly engaging a threaded stud -10- into a pad - S- being welded to the base fitting -1- and/or into the actual fitting -1-, depending on the thickness, a seal - 7- being arranged, the fastening being carried out by means of a nut -13-. The stud -12- and the nut -13- can of course be replaced with a headed screw.

The wear control probe is computer fed for the inspection, follow-up, control and planning of the actions to be carried out in the whole network.

It is convenient to standardise the thicknesses of the general network, i.e. the base fittings, so as to have them measuring less than 15 millimetres, since the wear doesn't necessarily have to be absorbed with said thicknesses but with the antiwear grafts having been described above.

In correspondence with the predictable wear area the grafts being made of high-tech bimetallic sheets can comprise less than 10% of the total surface in a 90° elbow.

The grafts are of small size and have a geometry conforming to the base element, the efficiency of the pneumatic conveyance hence not being affected by them.

In the conveyance network the elbows, junctions, etc. have different angles, Figs. 5 and 6 each illustrating the case of a 90° and a 30° elbow, respectively.

Under normal conveying conditions for the case of a 90° elbow the wear area -D90- is punctual and slightly oval-shaped (see Fig. 5A) and only affects the elbow, and in the case of a 30° elbow the wear area -D30- is elongated and slightly oval-shaped (in some cases it can be 1 mtr. long or even longer) and affects very little the elbow while to a big extent affecting the extension or contiguous straight pipe as shown in Fig. 6A as compared with Fig. 5A, the intermediary dotted line marking the two wear areas in the elbow and in the extension.

## Claims

1. Antiwear protection system using antiwear graft fittings being applicable in pipe elbows and branchings especially of the pneumatic conveyance network of a pneumatic waste collection facility, in said areas being possibly subjected to abrasion or impact wear the base fittings (1) corresponding to the pipes being reinforced in order to thus minimise the wear, said reinforcements comprising the graft being made of antiwear alloys or metals and the like in said areas (I) of the base fittings and thus obtaining effects notably multiplying the resistance of the base metals, said components being made up by the elements of the base fittings being provided with grafts being integrated into the base fitting of the main pipe by means of welding or screw fastening onto the base fitting; **characterised in that** all of the components (2, 8) to be attached to said areas (I) are metallic and are made of a bimetallic sheet being composed of a base sheet (2, 4) with a deposition of Fe-Cr-Mn-Bo or Fe-Cr-Nb-Mo-W alloys, etc. on it, said special alloys allowing the fittings to attain the duration having been described above.

2. Antiwear protection system as per claim 1, **characterised in that** a pneumatic conveyance is used with pipes of a diameter of between 400 and 550 mm and with a bend radius at the elbows being within the range of between 3D and 4D (D = 1,200 to 2,200 mm) of radius.

3. Antiwear protection system as per claim 1, **characterised in that** it comprises the arrangement of a control probe (T) in the wear area (I) for measuring the actual thicknesses by means of ultrasounds in the inspectable fittings thereby feeding a computerised process for the inspection, follow-up, control and planning of the actions to be carried out in the whole network.

4. Antiwear protection system as per claim 1, comprising a separate graft piece (8) to be installed only in inspectable areas, **characterised in that** this latter's attachment is carried out by means of screw fastening (10) and **in that** an adequate seal (7) is provided in order to prevent the conveying air from leaking from the duct.

5. Antiwear protection system as per claim 1, **characterised in that** the graft piece (2) comprising the base fitting (4) and the antiwear graft (3) is attached by welding (5) to the base fitting or pipe of the network.

6. Antiwear protection system as per claim 1, **characterised by** providing for a general standardisation of the thicknesses of the general or base network (1) according to which said thicknesses will be of less than 15 millimetres since the wear is directly absorbed by the antiwear grafts having been described above and in no way by the network, regardless of its thickness.

7. Antiwear protection system as per claim 1, **characterised in that** the grafts being made of high-tech bimetallic sheets (2, 8) conform only to the area that will be predictably subjected to wear, said area in a 90° elbow possibly comprising less than 10% of the total surface, this bringing about a reduction of their execution costs.

8. Antiwear protection system as per claim 1, **characterised in that** the grafts (2, 8) are of small size and have a geometry conforming to the base element, this preventing the efficiency of the pneumatic conveyance from being affected and allowing to attain the possibly lowest cost for the assembly.

9. Antiwear protection system as per claim 1, **characterised in that** under normal conveying conditions in the 90° elbows and the like the wear area (D90) is punctual and slightly oval-shaped and in the 30° elbows the wear area (D30) is elongated and oval-shaped and affects the actual elbow to a small extent and the contiguous extension or straight pipe to a large extent.
